# EUROPÄISCHE PATENTSCHRIFT

(11) **EP 2 839 184 B1**
(45) Veröffentlichungstag und Bekanntmachung des Hinweises auf die Patenterteilung: **09.11.2016**
(21) Anmeldenummer: 13718319.0
(22) Anmeldetag: 19.04.2013
(51) Int. Cl.: F16G 13/16, G01L 1/22

(54) **ÜBERWACHUNGSSYSTEM FÜR ZUG- UND DRUCKKRÄFTE IN EINER ENERGIEFÜHRUNGSKETTE UND ENTSPRECHENDER KRAFTAUFNEHMER**
MONITORING SYSTEM FOR TRACTIVE AND COMPRESSIVE FORCES IN A POWER TRACK CHAIN AND CORRESPONDING FORCE SENSOR
SYSTÈME DE SURVEILLANCE DES FORCES DE TRACTION ET DE PRESSION DANS UNE CHAÎNE D'ACHEMINEMENT D'ÉNERGIE, ET CAPTEUR DE FORCE ASSOCIÉ

(30) Priorität: 19.04.2012 DE 202012003907 U
(43) Veröffentlichungstag der Anmeldung: 25.02.2015
(73) Patentinhaber: Igus GmbH, 51147 Köln (DE)
(72) Erfinder: JAEKER, Thilo Alexander, 53757 St. Augustin (DE); HERMEY, Andreas, 53773 Hennef (DE)
(74) Vertreter: Lippert, Stachow & Partner
(86) Internationale Anmeldenummer: PCT/EP2013/058202
(87) Internationale Veröffentlichungsnummer: WO 2013/156607

(56) Entgegenhaltungen:
- EP-A1- 0 256 392
- DE-U1-202008 001 415

## Beschreibung

Die Erfindung betrifft allgemein ein Überwachungssystem für den Betrieb einer Energieführungskette mit einer Vielzahl miteinander gelenkig verbundener Kettenglieder zur geschützten Führung von Kabeln, Schläuchen oder dergleichen zwischen einer ersten Anschlussstelle und einer relativ zu dieser beweglichen zweiten Anschlussstelle. Die Erfindung betrifft insbesondere ein Überwachungssystem zur Überwachung von Zug- und Druckkräften in einer solchen Energieführungskette sowie einen speziell für ein solches Überwachungssystem geeigneten Kraftaufnehmer, welcher zur Messung der zwischen einem Mitnehmer und einem beweglichen Ende der Energieführungskette übertragenen Zug- oder Druckkraft ausgelegt ist.

Eine Bewegung der Energieführungskette verursacht aufgrund von Reibung und Trägheit stets eine der Bewegung des beweglichen Endes entgegen gesetzte Kraft.

Insbesondere bei langen und schweren Energieführungsketten, beispielsweise bei Lastkränen für die Containerverladung, können diese Kräfte erhebliche Ausmaße annehmen. Um durch übermäßige Kräfte entstehende Störungen zu vermeiden, ist aus dem deutschen Gebrauchsmuster DE 203 05 619 bzw. der internationalen Patentanmeldung WO 2004/090375 ein gattungsgemäßes Überwachungssystem bekannt.

Bei diesem Überwachungssystem gemäß DE 203 05 619 bzw. WO 2004/090375 wird eine spezielle Anschlusseinrichtung verwendet, welche als Linearführung und zur schwimmenden Lagerung für die verwendete Wägezelle erforderlich ist. Solche Überwachungssysteme werden inzwischen vielfach erfolgreich eingesetzt, beispielsweise bei Lastkränen für die Containerverladung. Dieses System erfordert jedoch eine relativ aufwändige Anschlusseinrichtung mit hohem Eigengewicht sowie besondere Wägezellen mit entsprechendem Stückpreis.

DE 2020 0800 1415 U offenbart ein Überwachungssystem nach dem Oberbegriff des Anspruch 1.

Ein solches System ist mithin in kleineren Anlagen, etwa Verkettungsautomaten für den Werkstücktransport oder bei Anwendungen in Werkzeugmaschinen nicht kosteneffizient einsetzbar. Es besteht jedoch auch bei kleineren Anlagen eine ebenso ausgeprägte Anforderung an die Ausfallsicherheit bzw. den Schutz der durch die Energieführungskette geführten Leitungen.

Der Erfindung liegt daher die Aufgabe zugrunde, eine kostengünstigere und dennoch zuverlässige Lösung zur Überwachung von Zug- und Druckkräften in einer Energieführungskette bereitzustellen.

Die erfindungsgemäße Aufgabe wird durch ein Überwachungssystem gemäß der Merkmalskombination des Anspruchs 1 einerseits und andererseits auch durch ein Verbindungsglied zur Befestigung des beweglichen Kettenendes an einem Mitnehmer gemäß der Merkmalskombination nach Anspruch 11 gelöst.

Das erfindungsgemäße Überwachungssystem zeichnet sich dadurch aus, dass der Kraftaufnehmer als Verbindungsglied zur Befestigung des beweglichen Endes der Energieführungskette am Mitnehmer gestaltet ist und die Funktion eines Biegebalkens realisiert. Hierzu umfasst der Kraftaufnehmer erfindungsgemäß mindestens einen Steg, welcher sich im Wesentlichen quer zur Richtung der bei Betrieb am beweglichen Ende entstehenden Zug- oder Druckkräfte erstreckt ist und demnach bei entsprechenden Kräften auf Biegung beansprucht wird. Ferner umfasst der Kraftaufnehmer zur Realisierung der Funktion eines Biegebalkens mindestens einen elastisch bzw. federnd verformbaren Biegebereich mit einem zugeordneten Sensor zur Messung der durch Biegung des Biegebereichs entstehenden Verformungen.

Das erfindungsgemäß vorgeschlagene Verbindungsglied zur Befestigung des beweglichen Endes am Mitnehmer zeichnet sich entsprechend dadurch aus, dass das Verbindungsglied selbst wiederum als Kraftaufnehmer verwendbar ist und somit entsprechend die vorstehend genannten Merkmale aufweist.

Dadurch, dass der Kraftaufnehmer selbst als Verbindungs- bzw. Befestigungsglied zur Befestigung des beweglichen Endes am Mitnehmer verwendbar ist, erübrigt sich insgesamt eine aufwändige Anschlusseinrichtung. Diese vereinfachte Befestigungsart ermöglicht die erfindungsgemäße Gestaltung des Kraftaufnehmers mit einem auf Biegung beanspruchten biegbaren Steg, ähnlich dem Prinzip eines Biegebalkens. Zudem ermöglicht diese Gestaltung zugleich eine aussagekräftige Messwerterfassung auch bei Anwendungen mit geringeren Reaktionskräften.

Der biegebalkenartige Aufbau des vorgeschlagenen Kraftaufnehmers zur Messung der Druck- und Zugkräfte hat ferner den Vorteil, dass durch den in Querrichtung erstreckten Steg eine Hebelwirkung genutzt wird, welche eine Verstärkung der elastischen Verformung und somit auch bei kleineren Kräften eine genaue Messung ermöglicht. Als federartige, elastische Verformung wird jedoch jede betragsmäßig geringe Biegung verstanden, die mit geeigneten Sensoren erfassbar ist. Mit anderen Worten ist somit als elastisch verformbarer bzw. biegbarer Biegebereich am quer erstreckten Steg, je nach den bei Betrieb auftretenden Kraftbereichen, auch ein Bereich mit verhältnismäßig großer Wandstärke zu verstehen insofern eine gewisse Mindestverformung im nominalen Bereich der Druck- oder Zugkräfte sichergestellt ist.

In einer bevorzugten Ausführungsform besitzt jeder Kraftaufnehmer jeweils genau zwei Stege, welche jeweils mindestens einen elastisch verformbaren Biegebereich mit zugeordnetem Sensor umfassen und mit gleicher Wirklänge parallel angeordnet sind. Die zwei Stege stellen demnach eine Parallelogramm-Viergelenk-Anordnung dar, welche bei Biegung der Stege kein Verschwenken, sondern eine Parallelverschiebung des beweglichen Endes der Energieführungskette relativ zum Mitnehmer sicherstellt. Eine der kraftbedingten Biegung inhärente Drehbewegung wird hierdurch nicht auf das mit dem Mitnehmer verbundene Ende der Energieführungskette übertragen.

In einer kostengünstigen und dennoch messtechnisch genauen Ausführungsform wird als Sensor an mindestens einem elastisch verformbaren Biegebereich ein Dehnungsmessstreifen (DMS) vorgesehen. In einer vorteilhaften Ausführung mit zwei Stegen hat jeder der beiden Stege jeweils zwei in Serie geschaltete Dehnungsmessstreifen. Hierbei sind die Dehnungsmessstreifen vorzugsweise symmetrisch und diametral gegenüberliegend angeordnet. Besonders bevorzugt sind die seriell geschalteten Dehnungsmessstreifen zu einer Wheatstone-Brücke parallel geschaltet, so dass die Dehnungsmessstreifen jedes Stegs jeweils zwischen den Versorgungsanschlüssen der Brückenschaltung in Serie geschaltet sind. Diese Anordnung ermöglicht zumindest teilweise die Kompensierung unerwünschter Biegemomente und Temperatureinflüsse. Für diese Ausführung weist jeder Kraftaufnehmer vorzugsweise zwei sowohl zur Querebene als auch zur Längsebene symmetrische Stege auf. Es können aber auch weniger als vier Dehnungsmessstreifen, beispielsweise lediglich zwei seriell geschaltete Dehnungsmessstreifen, an diametral gegenüberliegenden Biegebereichen vorgesehen werden. Auch bei Verwendung von weniger als vier Dehnungsmessstreifen sind diese bevorzugt in einer Brückenschaltung, insbesondere als Wheatstone-Brücke angeordnet. Diese Messbrücke ist entsprechend über einen Steckeranschluss des Kraftaufnehmers an die Auswerteeinheit des Überwachungssystems anschließbar.

Alternativ zu Dehnungsmessstreifen (DMS) ist es auch denkbar, einen anderen geeigneten Sensortyp zu verwenden, etwa piezoelektrische, optische oder induktive.

Zur Erzielung einer gewissen Hebelwirkung ist es vorteilhaft, wenn der Steg bzw. die Stege bezüglich ihres Biegebereichs eine theoretisch insgesamt auf Biegung beanspruchbare Wirklänge von mindestens 20%, vorzugsweise mindestens 25%, bezogen auf den Hebelarm, mit welchem die Reaktionskraft der Kette auf den Mitnehmer wirkt, aufweisen. Als Bezugsgröße wird somit auf den Hebelarm abgestellt, senkrecht zur Kraftrichtung zwischen der Befestigungsstelle am Mitnehmer und der Gelenkachse des bezüglich des Mitnehmers nächstliegenden Gelenks der Energieführungskette angesetzt. Durch eine entsprechende, auf Biegung beanspruchbare Mindestlänge, wird auch bei mittelgroßen und kleineren Energieführungsketten, d.h. Anwendungen mit betragsmäßig geringeren Kräften noch eine praktisch messbare Verformung erzeugt.

Der erfindungsgemäß als Verbindungsglied dienende Kraftaufnehmer bzw. das als Kraftaufnehmer dienende Verbindungsglied ist vorzugsweise, abgesehen von der gewünschten inhärenten Biegebeanspruchung, zur gegebenenfalls lösbaren Befestigung am Mitnehmer verwendbar. Hierzu ist es zweckmäßig, wenn ein mit dem mindestens einen oder, falls vorgesehen, mit den beiden Stegen einteilig oder einstückig geformter erster Flansch vorgesehen ist. An diesem Flansch sind geeignete Mittel zur Befestigung des Kraftaufnehmers und des wiederum an diesem befestigten beweglichen Endes der Energieführungskette angeordnet . Es können beispielsweise Bohrungen oder Gewinde zur Befestigung mittels Schraubverbindung vorgesehen sein. Der erste Flansch dient dann entsprechend als stationärer Bezugspunkt, gegenüber welchem die Biegung der elastischen Biegebereiche des mindestens einen Stegs erfolgt. Zur Einleitung der Druck- oder Zugkräfte in den Kraftaufnehmer ist es bei letztgenannter Ausführungsform zweckmäßig, wenn der Kraftaufnehmer weiter eine mit dem mindestens einen oder gegebenenfalls mit den beiden Stegen einstückig geformten zweiten Flansch umfasst. Dieser dient dann entsprechend zur Befestigung des Kraftaufnehmers am beweglichen Ende der Energieführungskette, beispielsweise anhand einer weiteren Schraubverbindung. Um einen gewissen Angriffswinkel der Kräfte am beweglichen Kettenende und ein günstiges Laufverhalten zu erzielen, hat der zweite Flansch vorzugsweise eine Anschlussfläche zur Befestigung am beweglichen Ende, welche schräg verläuft im Vergleich zu einer Anschlussfläche am ersten Flansch, d.h. schräg zur Bewegungsebene des Mitnehmers verläuft. Die Breite der beiden Anschlussflächen, insbesondere der Anschlussfläche am zweiten Flansch, in Richtung senkrecht zur Biegungsebene bzw. Kettenmittelebene entspricht hierbei vorzugsweise der Breite der oberen Schmalseite eines Laschenstrangs der zu überwachenden Energieführungskette.

Der vorgeschlagene Kraftaufnehmer kann als separates Verbindungsglied der Befestigung, d. h. als Zwischenstück zwischen dem beweglichen Ende der Energieführungskette und dem Mitnehmer, gestaltet sein. Hierzu ist in einer zweckmäßigen Ausführungsform vorgesehen, dass der Kraftaufnehmer ein einstückig aus Metall oder aus Kunststoff, insbesondere aus zur Spritzguss-Verarbeitung geeigneten Kunststoff, hergestelltes Gestell umfasst. Metall gewährleistet bei Verformung ohne weiteres eine hinreichende Proportionalität des Messwerts zur der zu erfassenden Krafteinwirkung. Kunststoff erlaubt typischerweise eine kostengünstigere Formgebung in der Herstellung. Unabhängig vom gewählten Material bildet das einstückige Gestell zugleich den mindestens einen oder gegebenenfalls die beiden Stege. Vorzugsweise kann dieses Gestell ebenfalls einstückig zusammen mit den Stegen und senkrecht hierzu ausgerichtet auch den ersten Flansch und gegebenenfalls auch den zweiten Flansch darstellen. In diesem Fall dient das einstückige Gestell als separates Verbindungsglied bzw. Zwischenstück zur Befestigung des beweglichen Endes am Mitnehmer. Ein Vorteil dieser Bauweise liegt darin, dass trotz der gewünschten Biegbarkeit eine verhältnismäßig steife bzw. bewegungslose Verbindung gewährleistet wird. Zudem können bei gleichbleibender Materialwahl durch entsprechende Formgebung unterschiedliche Elastizitäten des Biegebereichs an jedem Steg in Abhängigkeit der gewünschten Anwendung erzielt werden.

Bei Verwendung eines vom beweglichen Ende der Kette getrennt ausgeführten Verbindungsglieds ist es zweckmäßig, wenn der am Mitnehmer zu befestigende erste Flansch ein Befestigungsprofil, beispielsweise ein Bohrbild bzw. eine Bohrungsschablone aufweist, welches identisch ist zum Befestigungsprofil, das typischerweise am beweglichen Ende der Energieführungskette, insbesondere als Bohrbild in der Schmalseite des Endglieds der Kette vorgesehen ist.

Als Alternative zur Ausführung des Verbindungsglieds bzw. Kraftaufnehmers als separates Zwischenstück liegt es auch im Rahmen der Erfindung, den Kraftaufnehmer und insbesondere den mindestens einen Steg mit Biegebalkenfunktion als integrierten Bestandteil eines Ketten-Endglieds zu gestalten. Hierbei dient das entsprechende Endglied mit Kraftaufnehmer dann zur Befestigung des beweglichen Endes der Energieführungskette am Mitnehmer.

Die vorstehend beschriebenen Merkmale des Kraftaufnehmers werden erfindungsgemäß ebenfalls als Merkmale des als Kraftaufnehmer gestalteten Verbindungsglieds vorgeschlagen und beansprucht.

Die Erfindung betrifft auch eine Energieführungskette mit einer Vielzahl miteinander gelenkig verbundener Kettenglieder zur geschützten Führung von Kabeln, Schläuchen oder dergleichen, wobei die Kettenglieder jeweils durch Seitenlaschen gebildet sind, welche durch die gelenkige Verbindung zu Laschensträngen verkettet und meist durch Querstege miteinander verbunden sind. Zur Vermeidung eines Bruchs der Energieführungskette ist an mindestens einem, vorzugsweise an beiden Laschensträngen des beweglichen Endes der Energieführungskette ein erfindungsgemäßer Kraftaufnehmer zur Befestigung des beweglichen Endes am Mitnehmer vorgesehen. Bei Anwendungen, in denen eine symmetrische Kraftverteilung auf beide Laschenstränge anzunehmen ist, kann an nur einem Laschenstrang ein echter Kraftaufnehmer vorgesehen werden. An dem anderen Laschenstrang wird dann zweckmäßig ein vereinfachtes, kostengünstigeres Verbindungsglied mit mechanisch gleichem Aufbau aber ohne Sensoren zur Messung der Verformung vorgesehen.

Schließlich betrifft die Erfindung folglich auch die Verwendung von mindestens einem, vorzugsweise von zwei entsprechenden Kraftaufnehmern, zur Messung der zwischen dem Mitnehmer und dem beweglichen Ende übertragenen Zug- oder Druckkräfte.

Weitere Einzelheiten, Vorteile und Merkmale der Erfindung lassen sich der nachfolgenden Beschreibung einiger Ausführungsbeispiele anhand der beigefügten Zeichnungen entnehmen. Dabei zeigen:
- FIG.1:: ein erfindungsgemäßes Überwachungssystem in schematischer Seitenansicht;
- FIG.2:: eine Seitenansicht des beweglichen Endes einer Energieführungskette, welches mit einem erfindungsgemäßen Verbindungsglied am Mitnehmer befestigt ist;
- FIG.3:: eine perspektivische Ansicht des beweglichen Endes einer Energieführungskette, mit jeweils einem erfindungsgemäßen Verbindungsglied an jedem der beiden Laschenstränge zur Befestigung am Mitnehmer;
- FIG.4:: eine vergrößerte perspektivische Ansicht eines erfindungsgemäßen Verbindungsglieds bzw. Kraftaufnehmers gemäß FIG.3;
- FIG.5A-5B:: eine schematische, perspektivische Ansicht eines im Verbindungsglied bzw. Kraftaufnehmer gemäß FIG.3-4 verwendeten einstückigen Gestells;
- FIG.6A-6C:: eine teilweise aufgebrochene Seitenansicht sowie zugehörige vertikale Schnitte gemäß Schnittlinien VIA und VIB des Verbindungsglieds bzw. Kraftaufnehmers gemäß FIG.4;
- FIG.7:: eine Veranschaulichung einer unerwünschten Momentenüberlagerung im Gestell gemäß FIG.5A-5B;
- FIG.8:: ein elektrisches Schaltschema der im Kraftaufnehmer gemäß FIG.6A-6C verwendeten Dehnungsmessstreifen;
- FIG.9:: eine Seitenansicht des beweglichen Endes einer Energieführungskette mit einem Verbindungsglied gemäß einem zweiten Ausführungsbeispiel.

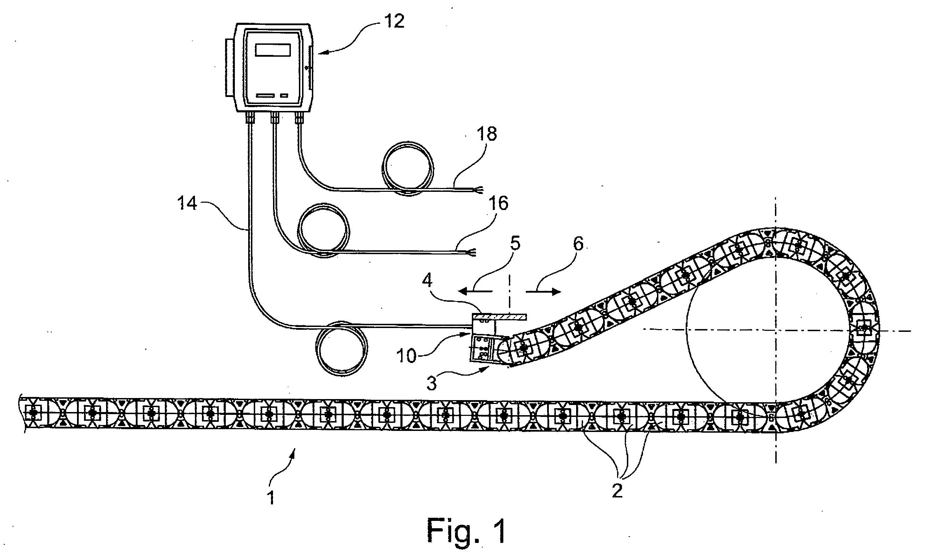

FIG.1 zeigt eine Energieführungskette 1 aus einer Vielzahl gelenkig miteinander verbundener Kettenglieder 2, welche ein bewegliches Ende 3 aufweist, das an einem rein schematisch gezeigten Mitnehmer 4 befestigt ist. Die Energieführungskette 1 dient in bekannter Weise zur geschützten Führung von Kabeln, Schläuchen oder dergleichen zwischen einer nicht näher gezeigten, feststehenden Anschlussstelle und einer beweglichen Anschlussstelle. An der beweglichen Anschlussstelle ist der Mitnehmer 4 vorgesehen, welcher beispielsweise an einem beweglichen Maschinenteil befestigt ist (nicht gezeigt). Im Beispiel gemäß FIG.1 ist der Mitnehmer 4 gemäß den Pfeilen 5, 6 horizontal nach links oder rechts bzw. vor oder zurück verfahrbar. Die hierbei auf die Energieführungskette 1 ausgeübten Druck- und Zugkräfte haben die gleiche Richtung 5, 6 und werden von einem Überwachungssystem überwacht, welches den Bruch der Energieführungskette 1 und insbesondere der durch diese geführten Leitungen bei Überbelastung verhindert. Hierzu hat das Überwachungssystem mindestens einen Kraftaufnehmer 10 und eine Auswertungseinheit 12, an welche der Kraftaufnehmer 10 über die Messleitung 14 angeschlossen ist. Die Auswertungseinheit 12 ist über eine Datenleitung 16 mit einem nicht näher gezeigten Automatisierungssystem üblicher Bauart verbunden und wird über eine Stromleitung 18 gespeist. Aufbau und Wirkweise der Auswertungseinheit 12 können in sich bekannter Weise erfolgen, beispielsweise gemäß der Beschreibung im Gebrauchsmuster DE 203 05 619. Der diesbezügliche Inhalt aus DE 203 05 619 wird vorliegend durch Verweis einbezogen. Alternativ zu der dort vorgeschlagenen Auswertung, welche eine Abhängigkeit zwischen Verfahrweg und dem nominalem Kraftwertbereich berücksichtigt, kann die Auswertungseinheit 12 vereinfacht mit festen Grenzwerten, d.h. ohne Information bezüglich der Position des beweglichen Endes 3, die gemessenen Kräfte allein hinsichtlich fester Grenzwerte auswerten.

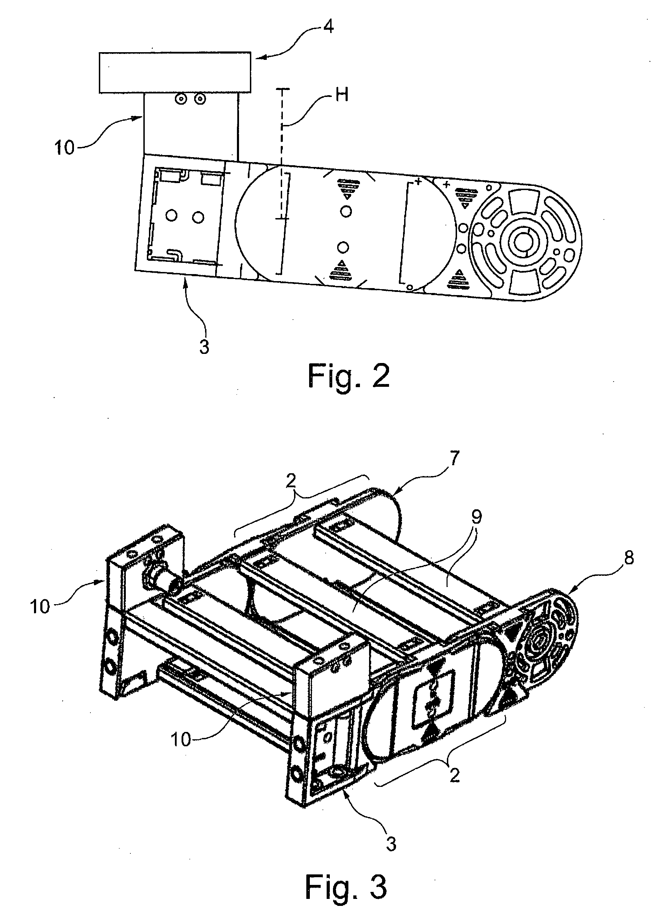

Wie aus FIG.2-3 näher ersichtlich, dient der Kraftaufnehmer 10 erfindungsgemäß zugleich als Verbindungsglied zur Befestigung des beweglichen Endes 3 der Energieführungskette 1 am Mitnehmer 4. Anders ausgedrückt ist in das Verbindungsglied 10 zugleich die Funktion eines Kraftaufnehmers integriert.

FIG.3 zeigt in perspektivischer Ansicht näher den typischen Aufbau der Energieführungskette 1 mit zwei sich gegenüber liegenden Laschensträngen 7, 8, welche durch Querstege 9 verbunden sind. FIG.3 zeigt ferner am Ende 3 jedes Laschenstrangs 7, 8 der Energieführungskette einen jeweiligen Kraftaufnehmer 10, welcher zur Befestigung des entsprechenden Laschenstrangs 7, 8 am Mitnehmer 4 dient. Alternativ kann auch ein einziger über die Gesamtbreite der Energieführungskette 1 durchgehender Kraftaufnehmer vorgesehen werden, welcher als Verbindungsglied zur Befestigung am Mitnehmer 4 und zugleich zur Kraftmessung geeignet ist.

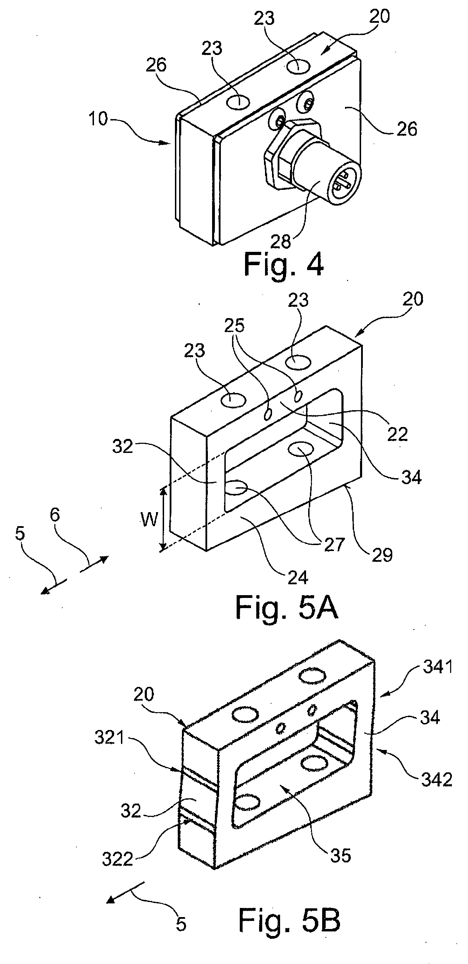

FIG.4 und FIG.5A-5B zeigen in perspektivischer Darstellung den Aufbau des Kraftaufnehmers bzw. Verbindungsglieds 10. Hauptbestandteil bildet ein rahmenartiges Gestell 20. Das Gestell 20 ist einstückig hergestellt beispielsweise durch geeignete CNC-Bearbeitung eines Rohlings aus Aluminium. Das Gestell 20 hat einen ersten, oberen Flansch 22 und einen gegenüberliegenden zweiten, unteren Flansch 24. Im ersten Flansch 22 sind Befestigungsbohrungen 23 zur Schraubverbindung mit dem Mitnehmer 4 vorgesehen. Die Befestigungsbohrungen 23 sind vorzugsweise gemäß dem gleichen Bohrbild bzw. der gleichen Schablone angebracht, wie die zur Befestigung am Endglied des beweglichen Endes 3 typischerweise vorgesehenen Befestigungsbohrungen so, dass keine Änderung am Mitnehmer 4 bzw. am zu versorgenden Teil erforderlich ist bei Nachrüstung mit Kraftaufnehmern 10.

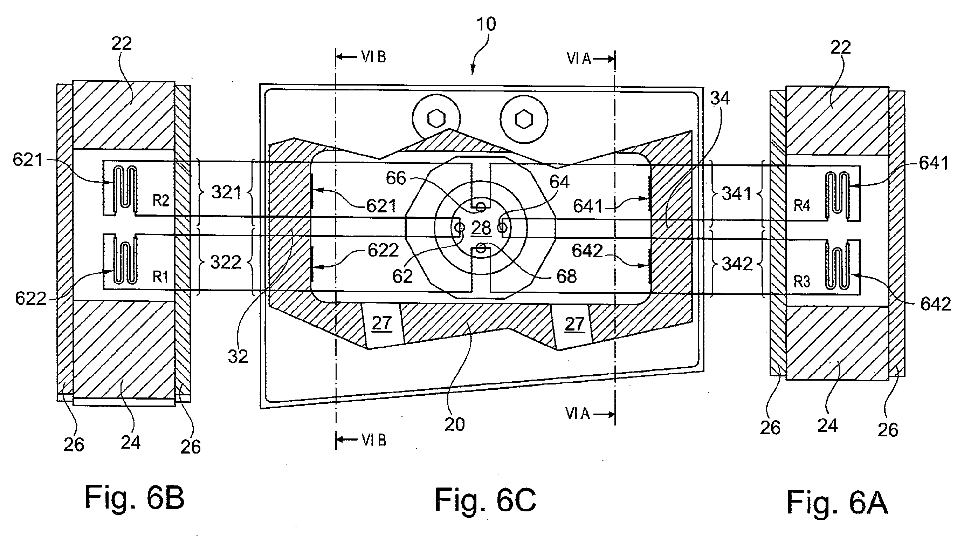

Am ersten Flansch 22 sind weiter Innengewinde 25 senkrecht zu den Breitseiten angebracht, welche zum Anschrauben von Seitendeckeln 26 an den feststehend befestigten ersten Flansch 22 dienen. Am bezüglich der Energieführungskette 1 innen liegenden Seitendeckel 26 ist eine Anschlussbuchse 28 für die Messleitung 14 vorgesehen. Anhand der Anschlussbuchse 28 werden im Kraftaufnehmer 10 gemäß FIG.6A-6C vorgesehene Sensoren an die Auswertungseinheit 12 angeschlossen.

Zur Befestigung des Kraftaufnehmers bzw. des Verbindungsglieds 10 am entsprechenden Laschenstrang 7, 8 des beweglichen Endes 3 sind im zweiten Flansch 24 zwei weitere Befestigungsbohrungen 27 vorgesehen. Bezogen auf die schräg gestellte untere Anschlussfläche 29 des zweiten Flansches 24 sind die Befestigungsbohrungen 27 ebenfalls nach dem gleichen Bohrbild vorgesehen, wie die Befestigungsbohrungen 23 am ersten Flansch 22. Die Anschlussfläche 29 am zweiten Flansch ist bezüglich der entsprechenden Anschlussfläche am ersten Flansch 22 nicht parallel, sondern schräg gestellt. Hierdurch wird ein für eine Krafteinleitung günstiger Anstellwinkel des Endglieds am beweglichen Ende 3 der Energieführungskette 1 erzeugt. Beide Anschlussflächen könnten auch trapezförmig zulaufen zur Erzeugung des Anstellwinkels. Die Anschlussfläche 29 kann alternativ auch parallel zur oberen Anschlussfläche am ersten Flansch 22 ausgeführt sein.

Wie am besten aus FIG.5A ersichtlich, umfasst der Kraftaufnehmer bzw. das Verbindungsglied 10, genauer dessen Gestell 20, zwei im Wesentlichen senkrecht zur Richtung 5, 6 der Zug- und Druckkräfte am beweglichen Ende 3 erstreckte Stege 32, 34. Wenn das bewegliche Ende 3 der Energieführungskette 1 am Mitnehmer 4 befestigt ist, werden bei Bewegung des Mitnehmers 4 somit die quer zur Krafteinwirkung verlaufenden Stege 32, 34 auf Biegung beansprucht. Um die Messung einer durch Biegung erzeugten Verformung zu ermöglichen, weist jeder Steg 32, 34 mindestens einen, vorzugsweise wie in FIG.5B gezeigt zwei elastisch verformbare Biegebereiche 321, 322 bzw. 341, 342 auf. Die Biegebereiche 321, 322; 341, 342 erstrecken sich jeweils etwa zwischen dem Übergang zu den Flanschen 22, 24 und der Mitte der Wirklänge W der Stege 32, 34. Zur Veranschaulichung ist in FIG.5B schematisch ein belasteter Zustand gezeigt, bei welchem eine Biegung im Bereich der quer verlaufenden Stege 32, 34 vorliegt, d. h. eine elastische, reversible Verformung in den Biegebereichen 321, 322; 341, 342 besteht. Diese elastische Verformung ist abhängig von der Reaktionskraft der Energieführungskette 1, z.B. gemäß Pfeilrichtung 5, welche aufgrund der durch den Mitnehmer 4 ausgeübten Kraft erzeugt wird. FIG.5A zeigt zum Vergleich den unbelasteten Zustand des Gestells 20, bei welchem keine Biegung der Stege 32, 34 vorliegt.

Wie ein Vergleich der FIG.5A und FIG.5B zeigt, sind die beiden Stege 32, 34 parallel und mit gleicher Wirklänge W angeordnet. Hierdurch wird sichergestellt, wie FIG.5B zeigt, dass stets eine Parallelverschiebung des beweglichen Endes 3, insbesondere des Endglieds der Energieführungskette 1 gegenüber dem Mitnehmer 4 erfolgt. Die Stege 32, 34 mit ihren Biegebereichen 321, 322; 341, 342 wirken zusammen mit den Flanschen 22, 24 in der Art eines Parallelogramm-Viergelenk-Mechanismus. Der Anstellwinkel des Endglieds am beweglichen Ende 3 gegenüber dem Mitnehmer 4 bleibt hierdurch auch bei Biegung des Gestells 20 unverändert.

FIG.5A-5B zeigen ferner eine zentrale Aussparung 35, welche dem Gestell 20 eine rahmenartige Form verleiht. Die gewünschte Elastizität der Biegebereiche 321, 322; 341, 342 lässt sich durch entsprechende Formgebung der Aussparung 35, je nach Anwendung und gewähltem Material des Gestells 20 einstellen. Bei geeigneter Formgebung durch Metallbearbeitung oder Kunststoff-Spritzgießen kann beispielsweise durch nicht näher gezeigte Verjüngungen den Biegebereichen 321, 322; 341, 342 eine Biegsamkeit verliehen werden, welche speziell an die nominal im Betrieb einer bestimmten Energieführungskette 1 auftretenden Kräfte angepasst ist. Die zentrale Aussparung 35 ist vorzugsweise gegenüber den vertikalen und horizontalen Mittelebenen des Gestells 20 jeweils symmetrisch gestaltet, um entsprechend symmetrische Biegebereiche 321, 322; 341, 342 zu erzeugen, welche unter anderem eine Parallelogrammwirkung erzielen. FIG.5A zeigt entsprechend die theoretisch maximal auf Biegung beanspruchbare Wirklänge W, welche für beide Stege 32, 34 gleich gewählt ist zur Wahrung der zuvor beschriebenen Parallelverschiebung des zweiten Stegs 24.

Um einen geeigneten Kompromiss zwischen der Steifigkeit der Stege 32, 34 und deren Biegsamkeit zu erzielen, ist die Wirklänge W im Betrag so gewählt, dass sie mindestens 20%, vorzugsweise mindestens 25% des die Biegung bewirkenden Hebelarms H, gezeigt in FIG.2, beträgt. Der Hebelarm H wird hierbei zwischen den Angriffspunkten der Kräfte gemessen, beispielsweise zwischen der Gelenkachse des dem Mitnehmer 4 am nächsten liegendes Gelenks der Energieführungskette 1 und der Befestigungsebene am Mitnehmer 4. Das Verbindungsglied bzw. der Kraftaufnehmer 10 vergrößert als Zwischenstück somit gemäß FIG.2 insgesamt den Hebelarm H und ist vorzugsweise so gestaltet, dass das Verhältnis W/H einen gewissen Mindestwert einhält, vorzugsweise W/H ≥ 0,2.

FIG.6A-6B zeigen eine bevorzugte Anordnung, gemäß welcher den Stegen 32, 34, insbesondere den Biegebereichen 321, 322; 341, 342 als Sensoren zur Messung der durch Biegung erzeugten Verformung jeweils ein entsprechender Dehnungsmessstreifen (DMS) 621, 622; 641, 642 zugeordnet ist. Wie aus der teilweise aufgebrochenen Seitenansicht in FIG.6C ersichtlich sind die Dehnungsmessstreifen 621, 622; 641, 642 jeweils an der Innenseite der Stege 32, 34 mit einem geeigneten Kleber befestigt. Hierbei werden die Dehnungsmessstreifen 621, 622; 641, 642 gegenüber den vertikalen und horizontalen Mittelebenen des Gestells 20 symmetrisch im Bereich der entsprechenden Biegebereiche 321, 322; 341, 342 befestigt. Die Seitendeckel 26 dienen dem Schutz der Dehnungsmessstreifen 621, 622; 641, 642 vor unerwünschten Einwirkungen.

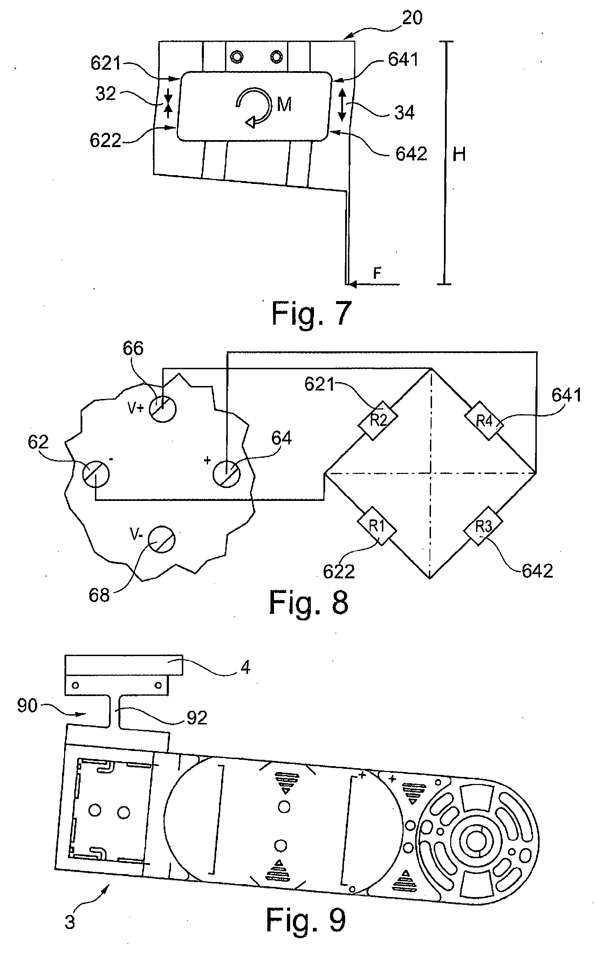

FIG.7 veranschaulicht schematisch die Überlagerung eines Kippmoments M, welches durch den inhärent vorhandenen Hebelarm H bei einer Reaktionskraft des beweglichen Endes 3 entsteht. Ein entgegen gesetztes Kippmoment entsteht entsprechend vorzeichenverkehrt bei Ausübung einer Zugkraft auf das bewegliche Ende 3 der Energieführungskette 1. Durch das eigentlich unerwünschte Moment M entsteht in dem einen Steg 32 in Längsrichtung des Stegs eine Stauchung, wohingegen im anderen Steg 34 umgekehrt eine Dehnung in Längsrichtung entsteht. Diese mit Doppelpfeilen in FIG.7 veranschaulichte Stauchung bzw. Dehnung in Längsrichtung der Stege 32, 34 beeinträchtigt die eigentlich gewünschte, biegungsbedingte Verformung an den Innenflächen der Biegebereiche 321, 322; 341, 342.

FIG.8 zeigt eine messtechnisch vorteilhafte Anordnung der Dehnungsmessstreifen 621, 622; 641, 642 in Form einer Wheatstone-Brücke. Bei der Anordnung gemäß FIG.8 sind die beiden an dem ersten Steg 32 angeordneten Dehnungsstreifen 621, 622 in Serie zu Anschlusskontakten 66, 68 für eine Versorgungsquelle geschaltet, schematisch mit V+ und V-angedeutet. Die beiden Dehnungsmessstreifen 641, 642 am gegenüber liegenden zweiten Steg 34 sind ebenfalls in Serie zu den zu Anschlusskontakten 66, 68 der Versorgungsquelle geschaltet. Bei der gewünschten, biegungsbedingten Verformung gemäß FIG.5B werden die jeweils diagonal gegenüber liegenden Dehnungsmessstreifen 621, 642 oder 622, 641 paarweise beide entweder auf Dehnung oder auf Stauchung beansprucht. Durch die gemäß FIG.8 bevorzugte Anordnung in der Messbrücken-Schaltung wird der dehnende oder stauchende Nebeneffekt des unerwünschten Moments M gemäß FIG.7 messtechnisch derart auf die einzelnen Dehnungsmessstreifen 621, 622; 641, 642 verteilt, dass die störende Auswirkung des Moments M sich näherungsweise kompensiert bezüglich den diagonal gegenüber liegenden Paaren aus Dehnungsmessstreifen 621-642 bzw. 622-641.

Die entsprechende Verschaltung der Dehnungsmessstreifen 621, 622; 641, 642 als Messbrücke ist auch in FIG.6A-6C veranschaulicht. FIG.6C zeigt zudem Anschlusskontakte 62, 64 der Messbrücke, an denen die eigentliche Signalmessung zur Kraftermittlung erfolgt. FIG.6C zeigt auch die Anschlusskontakte 66, 68 der Anschlussbuchse 28, an denen die Versorgungsquelle, beispielsweise eine Konstantspannungsquelle, angeschlossen wird. Signalmessung und Versorgung erfolgen hierbei über die Messleitung 14 durch die Auswertungseinheit 12.

FIG.9 zeigt schließlich ein zweites mögliches Ausführungsbeispiel eines erfindungsgemäßen Verbindungsglieds 90, welches zugleich als Kraftaufnehmer verwendbar ist. Im Gegensatz zum ersten Ausführungsbeispiel gemäß FIG.1-7 weist das Verbindungsglied bzw. der Kraftaufnehmer 90 gemäß FIG.9 lediglich einen einzigen im Wesentlichen quer zur Zug-/Druckkraftrichtung verlaufenden Steg 92 auf, welcher im Betrieb auf Biegung beansprucht wird. Diese Lösung ist konstruktionstechnisch einfach und kostengünstig, hat jedoch den Nachteil, dass der Anstellungswinkel des Endglieds gegenüber dem Mitnehmer nicht konstant gehalten wird und auch eine messtechnische Kompensierung gemäß FIG.8 nicht erzielt werden kann.

Abschließend sei noch erwähnt, dass bei einem Ausführungsbeispiel gemäß FIG.3 mit jeweils einem Verbindungsglied 10 an jedem Laschenstrang 7, 8 nicht zwingend in jedem der beiden Verbindungsglieder Sensoren, etwa Dehnungsmessstreifen 621, 622; 641, 642, zur Messung der durch Biegung erzeugten Verformung vorgesehen werden müssen. Es kann auch lediglich im linken oder im rechten Laschenstrang 7, 8 ein zugleich als Kraftaufnehmer dienendes Verbindungsglied 10 vorgesehen werden, wohingegen im anderen Laschenstrang lediglich ein Verbindungsglied mit baugleichem Gestell 20 gemäß FIG.5A, jedoch ohne Dehnungsmessstreifen gemäß FIG.6A-6C vorgesehen wird. Eine Verwendung von Kraftaufnehmern 10 jeweils für jeden Laschenstrang 7, 8 bringt jedoch messtechnisch höhere Genauigkeit und höhere Sicherheit durch Redundanz.

### Bezugzeichenliste

- 1: Energieführungskette
- 2: Kettenglied
- 3: bewegliches Ende
- 4: Mitnehmer
- 5, 6: Verfahrrichtung
- 7, 8: Laschenstrang
- 9: Quersteg
- 10: Kraftaufnehmer bzw. Verbindungsglied
- 12: Auswertungseinheit
- 14: Messleitung
- 16: Datenleitung
- 18: Stromleitung
- 20: Gestell
- 22: erster Flansch
- 23: Befestigungsbohrung
- 24: zweiter Flansch
- 25: Innengewinde
- 26: Seitendeckel
- 27: Befestigungsbohrung
- 28: Anschlussbuchse
- 32: erster Steg
- 34: zweiter Steg
- 321, 322: Biegebereiche
- 341, 342: Biegebereiche
- 35: Aussparung
- 62, 64: Anschlüsse für Versorgungsquelle
- 621, 622: Dehnungsmessstreifen
- 641, 642: Dehnungsmessstreifen
- 66, 68: Anschlüsse zur Brückenmessung
- 90: Kraftaufnehmer bzw. Verbindungsglied
- 92: Steg

## Patentansprüche

1. Überwachungssystem für Zug- und Druckkräfte in einer Energieführungskette (1) mit einer Vielzahl miteinander gelenkig verbundener Kettenglieder (2) zur geschützten Führung von Kabeln, Schläuchen oder dergleichen, umfassend mindestens einen Kraftaufnehmer (10; 90) zur Messung einer zwischen einem Mitnehmer (4) und einem beweglichen Ende (3) der Energieführungskette übertragenen Zug- oder Druckkraft; sowie eine Auswertungseinheit (12) zur Auswertung der vom Kraftaufnehmer erfassten Messsignale;
der Kraftaufnehmer (10; 90) als Verbindungsglied zur Befestigung des beweglichen Endes (3) der Energieführungskette (1) am Mitnehmer (4) gestaltet ist und mindestens einen im Wesentlichen quer zur Zug-/Druckkraftrichtung erstreckten Steg (32, 34; 92)
umfasst, **dadurch gekennzeichnet, dass** der Steg bei in Kettenlängsrichtung wirkender Zug- oder Druckkraft auf Biegung beansprucht wird und mindestens einen elastisch verformbaren Biegebereich (321, 322; 341, 342) mit einem zugeordneten Sensor (621, 622, 641, 642) zur Messung einer durch Biegung erzeugten Verformung aufweist, und dass der Kraftaufnehmer (10; 90) einen mit mindestens einem Steg (32, 34; 92) einstückig geformten ersten Flansch (22) umfasst, welcher Mittel (23) zur Befestigung des Kraftaufnehmers (10; 90) am Mitnehmer (4) aufweist.

2. Überwachungssystem nach Anspruch 1, **dadurch gekennzeichnet, dass** der Kraftaufnehmer (10) zwei Stege (32, 34) aufweist, welche jeweils mindestens einen elastisch verformbaren Biegebereich (321, 322; 341, 342) mit einem zugeordneten Sensor umfassen und parallel mit gleicher Wirklänge angeordnet sind, um bei Biegung der Stege eine Parallelverschiebung des beweglichen Endes der Energieführungskette gegenüber dem Mitnehmer sicher zu stellen.

3. Überwachungssystem nach einem der Ansprüche 1 oder 2, **dadurch gekennzeichnet, dass** an dem mindestens einen elastisch verformbaren Biegebereich (321, 322; 341, 342) als Sensor ein Dehnungsmessstreifen (621, 622, 641, 642) befestigt ist.

4. Überwachungssystem nach Anspruch 2 und 3, **dadurch gekennzeichnet, dass** an jedem der beiden Stege (32, 34) jeweils zwei in Serie geschaltete Dehnungsmessstreifen (621, 622; 641, 642) vorgesehen sind, wobei die Dehnungsmessstreifen vorzugsweise symmetrisch und diametral gegenüberliegend angeordnet sind und die seriell geschalteten Dehnungsmessstreifen (621, 622; 641, 642) vorzugsweise zu einer Wheatstone-Brücke parallel geschaltet sind, so dass die Dehnungsmessstreifen jedes Stegs jeweils zwischen den beiden Versorgungsanschlüssen (66, 68) der Wheatstone-Brücke in Serie geschaltet sind.

5. Überwachungssystem nach einem der Ansprüche 1 bis 4, **dadurch gekennzeichnet, dass** der Steg (92) bzw. die beiden Stege (32, 34) eine auf Biegung beanspruchbare Wirklänge (W) von mindestens 20%, vorzugsweise mindestens 25%, des Biegung bewirkenden Hebelarms (H), gemessen zwischen der Befestigungsstelle am Mitnehmer (4) und der Gelenkachse des nächstliegenden Gelenks der Energieführungskette (1), aufweist bzw. aufweisen.

6. Überwachungssystem nach Anspruch 2 oder 4, **dadurch gekennzeichnet, dass** der erste Flansch (22) des Kraftaufnehmers (10; 90) mit den beiden Stegen (32, 34) einstückig geformt ist.

7. Überwachungssystem nach Anspruch 6, **dadurch gekennzeichnet, dass** der Kraftaufnehmer (10; 90) weiter einen einstückig geformten zweiten Flansch (24) umfasst, welcher vorzugsweise Mittel (27) zur Befestigung am beweglichen Ende (3) der Energieführungskette (1) aufweist, wobei eine Anschlussfläche (29) am zweiten Flansch (24) vorzugsweise schräg zu einer Anschlussfläche (22) am ersten Flansch verläuft.

8. Überwachungssystem nach einem der Ansprüche 1 bis 7, **dadurch gekennzeichnet, dass** der Kraftaufnehmer (10; 90) ein einstückig aus Metall oder Kunststoff hergestelltes Gestell (20) umfasst, welches den mindestens einen (92) oder gegebenenfalls die beiden Stege (32, 34) bildet, vorzugsweise einstückig hiermit und senkrecht hierzu auch den ersten Flansch (22) und gegebenenfalls den zweiten Flansch (24) bildet, wobei das Gestell (20) als separates Verbindungsglied zur Befestigung des beweglichen Endes der Energieführungskette am Mitnehmer (4) gestaltet ist.

9. Überwachungssystem nach Anspruch 8, **dadurch gekennzeichnet, dass** der erste Flansch (22) zur Befestigung am Mitnehmer (4) ein Befestigungsprofil, insbesondere ein Bohrbild, aufweist, welches identisch mit dem Befestigungsprofil des beweglichen Endes (3) der Energieführungskette ist.

10. Überwachungssystem nach einem der Ansprüche 1 bis 7, **dadurch gekennzeichnet, dass** der Kraftaufnehmer, insbesondere der mindestens eine Steg, integrierter Bestandteil eines Kettenendglieds ist, welches als Verbindungsglied zur Befestigung des beweglichen Endes (3) der Energieführungskette (1) am Mitnehmer (4) gestaltet ist.

11. Energieführungskette (1) mit einer Vielzahl miteinander gelenkig verbundener Kettenglieder (2) zur geschützten Führung von Kabeln, Schläuchen oder dergleichen, wobei die Kettenglieder jeweils durch Seitenlaschen gebildet sind, welche durch die gelenkige Verbindung zu Laschensträngen (7, 8) verkettet sind; wobei an mindestens einem, vorzugsweise an beiden Laschensträngen (7, 8) des beweglichen Endes (3) der Energieführungskette ein Verbindungsglied vorgesehen ist
das Verbindungsglied (10; 90) als Kraftaufnehmer zur Messung von zwischen dem Mitnehmer (4) und dem beweglichen Ende (3) übertragenen Zug- oder Druckkräften gestaltet ist und mindestens einen im Wesentlichen quer zur Zug-/Druckkraftrichtung erstreckten Steg (32, 34; 92) umfasst, **dadurch gekennzeichnet, dass** der Steg bei Zug- oder Druckkraft in Kettenlängsrichtung auf Biegung beansprucht wird und mindestens einen elastisch verformbaren Biegebereich (321, 322; 341, 342) mit einem zugeordneten Sensor (621, 622, 641, 642) zur Messung der bei Biegung erzeugten Verformung am Biegebereich aufweist, und dass der Kraftaufnehmer (10; 90) einen mit mindestens einem Steg (32, 34; 92) einstückig geformten ersten Flansch (22) umfasst, welcher Mittel (23) zur Befestigung des Kraftaufnehmers (10; 90) am Mitnehmer (4) aufweist.

12. Energieführungskette nach Anspruch 11, **dadurch gekennzeichnet, dass** der Kraftaufnehmer (10) zwei Stege (32, 34) aufweist, welche jeweils mindestens einen elastisch verformbaren Biegebereich (321, 322; 341, 342) mit einem zugeordneten Sensor umfassen und parallel mit gleicher Wirklänge angeordnet sind, um bei Biegung der Stege eine Parallelverschiebung des beweglichen Endes der Energieführungskette gegenüber dem Mitnehmer sicher zu stellen.

13. Energieführungskette nach einem der Ansprüche 11 oder 12, **dadurch gekennzeichnet, dass** an dem mindestens einen elastisch verformbaren Biegebereich (321, 322; 341, 342) als Sensor ein Dehnungsmessstreifen (621, 622, 641, 642) befestigt ist ; oder
dass an jedem der beiden Stege (32, 34) jeweils zwei in Serie geschaltete Dehnungsmessstreifen (621, 622; 641, 642) vorgesehen sind, wobei die Dehnungsmessstreifen vorzugsweise symmetrisch und diametral gegenüberliegend angeordnet sind und die seriell geschalteten Dehnungsmessstreifen (621, 622; 641, 642) vorzugsweise zu einer Wheatstone-Brücke parallel geschaltet sind, so dass die Dehnungsmessstreifen jedes Stegs jeweils zwischen den beiden Versorgungsanschlüssen (66, 68) der Wheatstone-Brücke in Serie geschaltet sind.

14. Energieführungskette nach einem der Ansprüche 12 bis 13, **dadurch gekennzeichnet, dass** der erste Flansch (22) des Kraftaufnehmers (10; 90) mit den beiden Stegen (32, 34) einstückig geformt ist, welcher Mittel (23) zur Befestigung des Kraftaufnehmers (10; 90) am Mitnehmer (4) aufweist; wobei vorzugsweise der Kraftaufnehmer (10; 90) weiter einen einstückig geformten zweiten Flansch (24) umfasst, welcher vorzugsweise Mittel (27) zur Befestigung am beweglichen Ende (3) der Energieführungskette (1) aufweist, wobei eine Anschlussfläche (29) am zweiten Flansch (24) vorzugsweise schräg zu einer Anschlussfläche (22) am ersten Flansch verläuft.

15. Energieführungskette nach einem der Ansprüche 11 bis 14, **dadurch gekennzeichnet, dass** der Kraftaufnehmer (10; 90) ein einstückig aus Metall oder Kunststoff hergestelltes Gestell (20) umfasst, welches den mindestens einen (92) oder gegebenenfalls die beiden Stege (32, 34) bildet, vorzugsweise einstückig hiermit und senkrecht hierzu auch den ersten Flansch (22) und gegebenenfalls den zweiten Flansch (24) bildet, wobei das Gestell (20) als separates Verbindungsglied zur Befestigung des beweglichen Endes der Energieführungskette am Mitnehmer (4) gestaltet ist; wobei vorzugsweise der erste Flansch (22) zur Befestigung am Mitnehmer (4) ein Befestigungsprofil, insbesondere ein Bohrbild, aufweist, welches identisch mit dem Befestigungsprofil des beweglichen Endes (3) der Energieführungskette ist.

16. Energieführungskette nach einem der Ansprüche 11 bis 15, **dadurch gekennzeichnet, dass** der Kraftaufnehmer, insbesondere der mindestens eine Steg, integrierter Bestandteil eines Kettenendglieds ist, welches als Verbindungsglied zur Befestigung des beweglichen Endes (3) der Energieführungskette (1) am Mitnehmer (4) gestaltet ist; und/oder
dass der Steg (92) bzw. die beiden Stege (32, 34) eine auf Biegung beanspruchbare Wirklänge (W) von mindestens 20%, vorzugsweise mindestens 25%, des Biegung bewirkenden Hebelarms (H), gemessen zwischen der Befestigungsstelle am Mitnehmer (4) und der Gelenkachse des nächstliegenden Gelenks der Energieführungskette (1), aufweist bzw. aufweisen.

## Claims

1. A monitoring system for traction and compression forces in an energy guide chain (1) having a plurality of hingedly interconnected chain link members (2) for protectedly guiding cables, hoses or the like, including at least one force sensor (10; 90) for measuring a traction or compression force transmitted between an entrainment member (4) and a moveable end (3) of the energy guide chain, and an evaluation unit (12) for evaluating the measurement signals detected by the force sensor; the force sensor (10; 90) being in the form of a connecting member for fixing the moveable end (3) of the energy guide chain (1) to the entrainment member (4) and including at least one web (32, 34; 92) extending substantially transversely to the traction/ compression force direction, **characterised in that** the web is stressed in flexing in the event of a traction or compression force acting in the longitudinal direction of the chain and has at least one elastically deformable flexural region (321, 322; 341, 342) with an associated sensor device (621, 622, 641, 642) for measuring a deformation produced by flexing, and **in that** the force sensor (10; 90) includes a first flange (22), which is shaped in one piece with at least one web (92) and which has means (23) for fixing the force sensor (10; 90) to the entrainment member (4).

2. Monitoring system according to claim 1 **characterised in that** the force sensor (10) has two webs (32, 34) which each include at least one elastically deformable flexural region (321, 322; 341, 342) with an associated sensor device and are arranged parallel with the same operative length in order upon flexing of the webs to ensure parallel displacement of the moveable end of the energy guide chain relative to the entrainment member.

3. Monitoring system according to one of claims 1 or 2 **characterised in that** a strain gauge (621, 622, 641, 642) is fixed as the sensor device to the at least one elastically deformable flexural region (321, 322; 341, 342).

4. Monitoring system according to claim 2 or claim 3 **characterised in that** two series-connected strain gauges (621, 622; 641, 642) are respectively provided at each of the two webs (32, 34), wherein the strain gauges are preferably arranged in symmetrical and diametrically opposite relationship and the series-connected strain gauges (621, 622; 641, 642) are preferably connected in parallel to constitute a Wheatstone bridge so that the strain gauges of each web are respectively connected in series between the two supply terminals (66, 68) of the Wheatstone bridge.

5. Monitoring system according to one of claims 1 to 4 **characterised in that** the web (92) or the two webs (32, 34) is or are of an operative length (W) which can be stressed in flexing of at least 20%, preferably at least 25%, of the lever arm (H) causing flexing, measured between the fixing location on the entrainment member (4) and the hinge axis of the most closely adjacent hinge of the energy guide chain (1).

6. Monitoring system according to claim 2 or 4 **characterised in that** the first flange (22) of the force sensor (10; 90) is shaped in one piece with the two webs (32, 34).

7. Monitoring system according to claim 6 **characterised in that** the force sensor (10; 90) further includes a second flange (24) which is shaped in one piece and which preferably has means (27) for fixing to the moveable end (3) of the energy guide chain (1), wherein a connecting surface (29) on the second flange (24) preferably extends inclinedly relative to a connecting surface (22) on the first flange.

8. Monitoring system according to one of claims 1 to 7 **characterised in that** the force sensor (10; 90) includes a frame structure (20) which is produced in one piece from metal or plastic and which forms the at least one web (92) or possibly the two webs (32, 34), preferably in one piece therewith, and also forms perpendicularly thereto the first flange (22) and possibly the second flange (24), wherein the frame structure (20) is in the form of a separate connecting member for fixing the moveable end of the energy guide chain to the entrainment member (4).

9. Monitoring system according to claim 8 **characterised in that** the first flange (22) for fixing to the entrainment member (4) has a fixing profile, in particular a bore pattern, which is identical to the fixing profile of the moveable end (3) of the energy guide chain.

10. Monitoring system according to one of claims 1 to 7 **characterised in that** the force sensor, in particular the at least one web, is an integrated component of an end-type chain link member, which is in the form of a connecting member for fixing the moveable end (3) of the energy guide chain (1) to the entrainment member (4).

11. An energy guide chain (1) comprising a plurality of hingedly interconnected chain link members (2) for protectedly guiding cables, hoses or the like, wherein the chain link members are respectively formed by side plates which are interlinked by the hinged connections to constitute side plate line arrays (7, 8), wherein provided at least one and preferably at both side plate line arrays (7, 8) of the moveable end (3) of the energy guide chain is a connecting member, the connecting member (10; 90) being in the form of a force sensor for measuring traction or compression forces transmitted between the entrainment member (4) and the moveable end (3) and including at least one web (32, 34; 92) extending substantially transversely relative to the traction/compression force direction, **characterised in that** the web is stressed in flexing in the event of a traction or compression force in the longitudinal direction of the chain and has at least one elastically deformable flexural region (321, 322; 341, 342) with an associated sensor device (621, 622, 641, 642) for measuring the deformation produced upon flexing at the flexural region, and **in that** the force sensor (10; 90) includes a first flange (22), which is shaped in one piece with at least one web (92) and which has means (23) for fixing the force sensor (10; 90) to the entrainment member (4).

12. Energy guide chain according to claim 11 **characterised in that** the force sensor (2) has two webs (32, 34) which each include at least one elastically deformable flexural region (321, 322; 341, 342) with an associated sensor device and are arranged parallel with the same operative length in order upon flexing of the webs to ensure parallel displacement of the moveable end of the energy guide chain relative to the entrainment member.

13. Energy guide chain according to one of claims 11 or 12 **characterised in that** a strain gauge (621, 622, 641, 642) is fixed as the sensor device to the at least one elastically deformable flexural region (321, 322; 341, 342); or
**in that** two series-connected strain gauges (621, 622; 641, 642) are respectively provided at each of the two webs (32, 34), wherein the strain gauges are preferably arranged in symmetrical and diametrically opposite relationship and the series-connected strain gauges (621, 622; 641, 642) are preferably connected in parallel to constitute a Wheatstone bridge so that the strain gauges of each web are respectively connected in series between the two supply terminals (66, 68) of the Wheatstone bridge.

14. Energy guide chain according to one of claims 12 or 13 **characterised in that** the first flange (22) of the force sensor (10; 90), which has means (23) for fixing the force sensor (10; 90) to the entrainment member (4), is shaped in one piece with the two webs (32, 34) ; wherein preferably the force sensor (10; 90) further includes a second flange (24) which is shaped in one piece and which preferably has means (27) for fixing to the moveable end (3) of the energy guide chain (1), wherein a connecting surface (29) on the second flange (24) preferably extends inclinedly relative to a connecting surface (22) on the first flange

15. Energy guide chain according to one of claims 11 to 14 **characterised in that** the force sensor (10; 90) includes a frame structure (20) which is produced in one piece from metal or plastic and which forms the at least one web (92) or possibly the two webs (32, 34), preferably in one piece therewith, and also forms perpendicularly thereto the first flange (22) and possibly the second flange (24), wherein the frame structure (20) is in the form of a separate connecting member for fixing the moveable end of the energy guide chain to the entrainment member (4); wherein preferably the first flange (22) for fixing to the entrainment member (4) has a fixing profile, in particular a bore pattern, which is identical to the fixing profile of the moveable end (3) of the energy guide chain.

16. Energy guide chain according to one of claims 11 to 15 **characterised in that** the force sensor, in particular the at least one web, is an integrated component of an end-type chain link member, which is in the form of a connecting member for fixing the moveable end (3) of the energy guide chain (1) to the entrainment member (4); and / or
the web (92) or the two webs (32, 34) is or are of an operative length (W) which can be stressed in flexing of at least 20%, preferably at least 25%, of the lever arm (H) causing flexing, measured between the fixing location on the entrainment member (4) and the hinge axis of the most closely adjacent hinge of the energy guide chain (1).

## Revendications

1. Un système de surveillance de forces de traction et de compression dans une chaîne de guidage d'énergie (1) ayant une pluralité de maillons de chaîne interconnectés de manière articulée pour guider de manière protégée des câbles, tuyaux souples ou similaires, comportant au moins un capteur de force (10; 90) destiné à mesurer une force de traction ou de compression transmise entre un élément d'entraînement (4) et une extrémité mobile (3) de la chaîne de guidage d'énergie, et une unité d'évaluation (12) pour évaluer les signaux de mesure détectés par le capteur de force; le capteur de force (10; 90) étant sous la forme d'un élément de fixation pour la fixation de l'extrémité mobile (3) de la chaîne de guidage d'énergie (1) à l'élément d'entraînement (4) et comprenant au moins une traverse (32, 34; 92) disposée sensiblement transversalement à la direction de force de traction ou de compression, **caractérisé en ce que** la traverse est sollicitée en flexion dans le cas d'une force de traction ou de compression agissant dans la direction longitudinale de la chaîne et comporte au moins une zone de flexion élastiquement déformable (321 , 322; 341, 342) avec un dispositif de détection (621, 622, 641, 642) associé pour mesurer une déformation produite par flexion, et **en ce que** le capteur de force (10; 90) comprend une première bride (22), qui est formée en une seule pièce avec au moins une traverse (92) et qui comporte des moyens (23) pour fixer le capteur de force (10; 90) à l'élément d'entraînement (4).

2. Système de surveillance selon la revendication 1, **caractérisé en ce que** le capteur de force (10) comporte deux traverses (32, 34) qui comprennent chacun au moins une zone élastiquement déformable en flexion (321, 322; 341, 342) avec un dispositif de capteur associé et qui sont disposés parallèlement et avec la même longueur opérationnelle afin d'assurer un déplacement parallèle de l'extrémité mobile de la chaîne de guidage d'énergie par rapport à l'élément d'entraînement lors de la flexion des traverses.

3. Système de surveillance selon l'une des revendications 1 ou 2, **caractérisé en ce qu'**une jauge de contrainte (621, 622, 641, 642) est fixée en tant que dispositif de détection à au moins une zone de flexion élastiquement déformable (321, 322; 341, 342).

4. Système de surveillance selon la revendication 2 ou la revendication 3, **caractérisé en ce que** deux jauges de contrainte (621, 622; 641, 642) connectées en série sont prévues respectivement à chacune des deux traverses (32, 34), dans lequel les jauges de contrainte sont de préférence disposées en relation symétrique et diamétralement opposée et les jauges de contrainte (621, 622; 641, 642) connectées en série sont de préférence connectées en parallèle pour constituer un pont de Wheatstone de façon à ce que les jauges de contrainte de chaque traverse sont respectivement connectées en série entre deux bornes d'alimentation (66, 68) du pont de Wheatstone.

5. Système de surveillance selon l'une des revendications 1 à 4, **caractérisé en ce que** la traverse (92) ou les deux traverses (32, 34) est ou sont d'une longueur opérationnelle (W) pouvant être soumise à la flexion correspondant à au moins 20%, de préférence au moins 25%, du bras de levier (H) provoquant la flexion, mesurée entre le point de fixation sur l'élément d'entraînement (4) et l'axe d'articulation plus proche de la chaîne de guidage d'énergie (1).

6. Système de surveillance selon la revendication 2 ou 4, **caractérisé en ce que** la première bride (22) du capteur de force (10; 90) est formée en une seule pièce avec les deux traverses (32, 34).

7. Système de surveillance selon la revendication 6, **caractérisé en ce que** le capteur de force (10; 90) comprend en outre une deuxième bride (24) qui est formée en une seule pièce et qui comporte de préférence des moyens (27) pour la fixation à l'extrémité mobile (3) de la chaîne de guidage d'énergie (1), dans lequel une surface (29) de fixation sur la deuxième bride (24) s'étend de préférence en oblique par rapport à une surface de fixation sur la première bride (22).

8. Système de surveillance selon l'une des revendications 1 à 7, **caractérisé en ce que** le capteur de force (10; 90) comprend une structure de châssis (20) qui est réalisé en une seule pièce en métal ou en plastique et qui forme au moins une traverse (92), ou éventuellement les deux traverses (32, 34), et qui forme perpendiculairement et de préférence en une seule pièce avec celle-ci, également la première bride (22), et éventuellement la deuxième bride (24), dans lequel la structure de châssis (20) se présente sous la forme d'un élément de fixation séparé pour fixer l'extrémité mobile de la chaîne de guidage d'énergie à l'élément d'entraînement (4).

9. Système de surveillance selon la revendication 8, **caractérisé en ce que** la première bride (22) présente un profil de fixation pour la fixation à l'élément d'entraînement (4), en particulier un motif de perçage, qui est identique au profil de fixation de l'extrémité mobile (3) de la chaîne de guidage d'énergie.

10. Système de surveillance selon l'une quelconque des revendications 1 à 7, **caractérisé en ce que** le capteur de force, en particulier l'au moins une traverse, est un composant intégré d'un maillon de chaîne d'extrémité, qui sert d'élément de fixation pour la fixation de l'extrémité mobile (3) de la chaîne de guidage d'énergie (1) à l'élément d'entraînement.

11. Chaîne de guidage d'énergie (1) comprenant une pluralité de maillons de chaîne (2) interconnectés de manière articulée pour guider de manière protégée des câbles, tuyaux souples ou similaires, dans lequel les maillons de chaîne comprennent respectivement des parties latérales, qui sont liées entre elles par des liaisons articulées de sorte à constituer des séquences de parties latérales (7, 8); un élément de fixation étant prévu du côté de l'extrémité mobile (3) de la chaîne de guidage d'énergie, au niveau d'au moins une des séquences de parties latérales (7, 8) et de préférence au niveau des deux séquences de parties latérales (7, 8), l'élément de fixation (10; 90) étant sous la forme d'un capteur de force pour mesurer des forces de traction ou de compression transmises entre l'élément d'entraînement (4) et l'extrémité mobile (3) et comprenant au moins une traverse (32, 34; 92) disposée sensiblement transversalement par rapport à la direction de force de traction ou de compression, **caractérisé en ce que** la traverse est sollicitée en flexion dans le cas d'une force de traction ou de compression agissant dans la direction longitudinale de la chaîne et comporte au moins une zone de flexion élastiquement déformable (321, 322; 341, 342) avec un dispositif de détection (621, 622, 641, 642) associé pour mesurer une déformation produite par flexion dans la zone de flexion, et **en ce que** le capteur de force (10; 90) comprend une première bride (22), qui est formée en une seule pièce avec au moins une traverse (92) et qui comporte des moyens (23) pour fixer le capteur de force (10; 90) à l'élément d'entraînement (4).

12. Chaîne de guidage d'énergie selon la revendication 11, **caractérisé en ce que** le capteur de force (2) comporte deux traverses (32, 34) qui comprennent chacun au moins une zone élastiquement déformable en flexion (321, 322; 341, 342) avec un dispositif de capteur associé et qui sont disposés parallèlement et avec la même longueur opérationnelle afin d'assurer un déplacement parallèle de l'extrémité mobile de la chaîne de guidage d'énergie par rapport à l'élément d'entraînement lors de la flexion des traverses.

13. Chaîne de guidage d'énergie selon l'une des revendications 11 ou 12, **caractérisé en ce qu'**une jauge de contrainte (621, 622, 641, 642) est fixée en tant que dispositif de détection à au moins une zone de flexion élastiquement déformable (321, 322; 341, 342); ou
**en ce que** deux jauges de contrainte (621, 622, 641, 642) connectées en série sont prévues respectivement à chacune des deux traverses (32, 34), dans lequel les jauges de contrainte sont de préférence disposées en relation symétrique et diamétralement opposée et les jauges de contrainte (621, 622; 641, 642) connectées en série sont de préférence connectées en parallèle pour constituer un pont de Wheatstone de façon à ce que les jauges de contrainte de chaque traverse sont respectivement connectées en série entre deux bornes d'alimentation (66, 68) du pont de Wheatstone.

14. Chaîne de guidage d'énergie selon l'une des revendications 12 ou 13, **caractérisé en ce que** la première bride (22) du capteur de force (10; 90), qui comporte des moyens (23) pour fixer le capteur de force (10; 90) à l'élément d'entraînement (4), est formée en une seule pièce avec les deux traverses (32, 34); dans lequel de préférence le capteur de force (10; 90) comprend en outre une deuxième bride (24) qui est formée en une seule pièce et qui comporte de préférence des moyens (27) pour la fixation à l'extrémité mobile (3) du guide d'énergie chaîne (1), dans lequel la surface (29) de fixation sur la deuxième bride (24) s'étend de préférence en oblique par rapport à une surface de fixation sur la première bride (22).

15. Chaîne de guidage d'énergie selon l'une des revendications 11 à 14, **caractérisé en ce que** le capteur de force (10; 90) comprend une structure de châssis (20) qui est réalisé en une seule pièce en métal ou en plastique, et qui forme au moins une traverse (92), ou éventuellement les deux traverses (32, 34), et qui forme perpendiculairement et de préférence en une seule pièce avec celle-ci, également la première bride (22), et éventuellement la deuxième bride (24), dans lequel la structure de châssis (20) se présente sous la forme d'un élément de fixation séparé pour fixer l'extrémité mobile de la chaîne de guidage d'énergie à l'élément d'entraînement (4); dans lequel de préférence
la première bride (22) présente un profil de fixation pour la fixation à l'élément d'entraînement (4), en particulier un motif de perçage, qui est identique au profil de fixation de l'extrémité mobile (3) de la chaîne de guidage d'énergie.

16. Chaîne de guidage d'énergie selon l'une des revendications 11 à 15, **caractérisé en ce que** le capteur de force, en particulier l'au moins une traverse, est un composant intégré d'un maillon de chaîne d'extrémité, qui sert d'élément de fixation pour la fixation de l'extrémité mobile (3) de la chaîne de guidage d'énergie (1) à l'élément d'entraînement (4); et / ou
la traverse (92) ou les deux traverses (32, 34) est ou sont d'une longueur opérationnelle (W) pouvant être soumise à la flexion correspondant à au moins 20%, de préférence au moins 25%, du bras de levier (H) provoquant la flexion, mesurée entre le point de fixation sur l'élément d'entraînement (4) et l'axe d'articulation le plus proche de la chaîne de guidage d'énergie (1).
